# EUROPÄISCHE PATENTSCHRIFT

(11) **EP 2 037 550 B1**
(45) Veröffentlichungstag und Bekanntmachung des Hinweises auf die Patenterteilung: **14.07.2010**
(21) Anmeldenummer: 07018145.8
(22) Anmeldetag: 14.09.2007
(51) Int. Cl.: H02B 1/06, H02G 5/04

(54) **Berührschutz für eine Schiene**
Protection against contact for a rail
Protection contre le contact pour un rail

(43) Veröffentlichungstag der Anmeldung: 18.03.2009
(73) Patentinhaber: Jean Müller GmbH Elektrotechnische Fabrik, 65343 Eltville (DE)
(72) Erfinder: Haber, Rainer, 65385 Rüdesheim (DE); Mathiowetz, Jörg, 65366 Geisenheim (DE)
(74) Vertreter: Quermann, Helmut

(56) Entgegenhaltungen:
- DE-A1- 2 360 260

## Beschreibung

Die Erfindung betrifft eine Anordnung einer Schiene, eines Berührschutzes für diese und einer elektrischen Verbindung mit der Schiene, mit dem Berührschutz für die rechteckigen Querschnitt aufweisende Schiene, insbesondere Sammelschiene, in einer elektrischen Verteileranlage und dergleichen, mit Schlitzen im Berührschutz, durch die ohne Abnahme des Berührschutzes die elektrische Verbindung mit der Schiene herstellbar ist, wobei die elektrische Verbindung mittels einer Klemme mit Klemmbacken erzielt wird, eine Klemmbacke Zähne aufweist, die Schlitze durchsetzen und die Schiene auf einer Seite kontaktieren, sowie eine andere Klemmbacke die Schiene auf der der einen Seite abgewandten Seite kontaktiert.

Eine derartige Anordnung ist aus der DE 2 360 260 A bekannt. Sie findet insbesondere bei einer Sammelschiene Verwendung, die ein Z-Profil aufweist. Der Berührschutz wird beim jeweiligen Z-Profil durch zwei identische, mit der Sammelschiene verbundene Abdeckteile erreicht. Das eine Abdeckteil ist auf der einen Seite auf das Z-Profil, das andere Abdeckteil auf der anderen Seite auf das Z-Profil aufgesteckt. Das jeweilige Abdeckteil weist ein mit dem Aufsteckbereich verbundenen plattenartigen Abschnitt auf. Plattenartige Abschnitte zweier Abdeckteile, die mit benachbarten Sammelschienen verbunden sind, überlappen sich und decken damit den Raum zwischen den benachbarten Sammelschienen ab. Der Aufsteckbereich des jeweiligen Abdeckteils ist mit den Schlitzen versehen, so dass die Z-Schiene in diesem Bereich nur durch die Schlitze zugänglich ist. Auf der anderen Seite der Z-Schiene ist diese nicht abgedeckt. Mittels der Klemme lässt sich der elektrische Anschluss eines elektrischen Gerätes herstellen. Eine Anschlussfahne dieses Gerätes wird mittels der Klemmbacken mit der Sammelschiene verbunden, wobei in dem dem Gerät zugewandten Bereich der Sammelschiene die Kontaktierung mittels der Zähne der einen Klemmbacke durch die Schlitze des Abdeckteils erfolgt und die andere Klemmbacke die Sammelschiene hintergreift und flächig an dieser anliegt.

In dieser Schrift wird somit ein Berührschutz zwischen benachbarten Sammelschienen beschrieben, wobei die jeweilige Sammelschiene nur deshalb berührgeschützt ist, weil zwei identische Abdeckteile, unabhängig voneinander, auf unterschiedliche Schenkel der Z-förmigen Sammelschiene aufgesteckt sind. Nur durch das Zusammenwirken der Abdeckteile in deren Abdeckbereichen wird die Sammelschiene berührgeschützt abgedeckt.

Der beschriebene Berührschutz ist kompliziert geformt und speziell der Z-Form der Sammelschiene angepasst. Er ist nicht für unterschiedliche Sammelschienengrößen geeignet und überdies nur bei definierten Abständen benachbarter Sammelschienen anwendbar. Er überbrückt den Raum zwischen benachbarten Sammelschienen und bedingt deshalb einen recht hohen Materialaufwand.

In dieser Schrift ist darauf hingewiesen, dass statt einer Sammelschiene mit Z-Profil auch eine Sammelschiene mit rechteckigem Querschnitt Verwendung finden kann. Erläuterungen, wie in diesem Fall der Berührschutz zu gestalten ist, finden sich in dieser Schrift allerdings nicht.

In der DE 89 03 177 U1 ist eine Vorrichtung zum Abdecken von Stromsammelschienen beschrieben. Im Bereich dieser Vorrichtung ist somit kein Zugang eines elektrischen Gerätes zur Sammelschiene möglich. Zum Abdecken der rechteckigen Querschnitt aufweisenden Sammelschiene ist ein Gehäuse vorgesehen, dass ein erstes Gehäuseteil und ein zweites Gehäuseteil aufweist, die ineinander steckbar sind und hierbei aufgrund Rastverbindungen in unterschiedlichen, ineinander gesteckten Stellungen zueinander positionierbar sind. Dies ermöglicht es, Sammelschienen unterschiedlicher Dicke mittels des Gehäuses enganliegend abzudecken. Um auch Sammelschienen unterschiedlicher Breite abdecken zu können, ist das eine Gehäuseteil mit Treppenanordnungen versehen, die symmetrisch zur Mittelachse dieses Gehäuseteils angeordnet sind, so dass in miteinander korrespondierenden Treppenstufen der Treppenanordnungen Sammelschienen unterschiedlicher Breite positioniert werden können. Das andere Gehäuse ist mit einem federartigen Vorsprung versehen, so dass die zwischen den beiden Gehäuseteilen angeordnete Sammelschiene präzise zwischen den für die jeweilige Sammelschienenbreite geeigneten Treppen positioniert werden kann. Das Gehäuse umschließt somit die Sammelschiene vollständig.

Aufgabe der vorliegenden Erfindung ist es, eine Anordnung der eingangs genannten Art so weiterzubilden, dass der Berührschutz bei einfacher Herstellbarkeit und Gestaltung unkompliziert an der Schiene angebracht werden kann und ein einfaches und sicheres Befestigen eines elektrischen Gerätes an der Schiene gewährleistet ist.

Gelöst wird die Aufgabe bei einer Anordnung der eingangs genannten Art dadurch, dass der andere Klemmbacken Zähne zum Kontaktieren der Schiene aufweist, der Berührschutz als Gehäuse ausgebildet ist, das die Schiene vollständig umgibt, das Gehäuse ein erstes Gehäuseteil mit Schlitzen für die Zähne des einen Klemmbackens und ein zweites Gehäuseteil mit Schlitzen für die Zähne des anderen Klemmbackens aufweist, wobei die beiden Gehäuseteile miteinander verbindbar sind.

Die Erfindung stellt somit eine Anordnung bereit, bei der der Berührschutz die jeweilige, rechteckigen Querschnitt aufweisende Schiene vollständig umgibt und unabhängig von benachbarten Schienen ist. Das jeweilige Gehäuse weist zwei Gehäuseteile auf, wobei jedes Gehäuseteil mit Schlitzen versehen ist, durch die die Kontaktierung der Schiene mittels der Zähne der Klemmbacken erfolgt. Die Breite und Länge der Schlitze ist so gewählt, dass Personen, die an der elektrischen Anlage arbeiten, nicht mit der Schiene in Kontakt gelangen können. Insbesondere ist die Schlitzgröße so gewählt, dass ein Berührschutz nach EN 60529 IP 20 erreicht wird.

Vorzugsweise weist das jeweilige Gehäuseteil in dessen Längserstreckung im Wesentlichen über dessen gesamte Länge nebeneinander angeordnete, identisch gestaltete Schlitze auf. Dies ermöglicht es, die Kontaktierung in einem beliebigen Bereich des jeweiligen Gehäuseteils, bezogen auf dessen Länge herbeizuführen. Es ist somit möglich, die anzuschließenden elektrischen Geräte beliebig bezüglich der Schiene, bezogen auf deren Längserstreckung, zu positionieren, da im Abstand der Schlitzteilung ein Zugang zur Schiene vorhanden ist. Insbesondere ist der Abstand benachbarter Schlitze der Schlitzanordnung des jeweiligen Gehäuseteils gleich.

Unter dem Aspekt des Anschließens eines elektrischen Gerätes an der Schiene an beliebiger Stelle wird es als besonders vorteilhaft angesehen, wenn die Schlitzabstände der Schlitze des einen Gehäuseteils den Schlitzabständen der Schlitze des anderen Gehäuseteils entsprechen. Vorzugsweise sind die beiden Gehäuseteile zwangsläufig so positioniert, dass jeweilige, durch die beiden Gehäuseteile gebildete Schlitzpaare miteinander fluchten. Hierdurch lässt sich die Breite des Schlitzes optimieren und es ist trotzdem sichergestellt, dass beim Positionieren einer Klemmbacke mit deren Zähnen an der Schiene die Zähne der anderen Klemmbacke in die Schlitze des anderen Gehäuseteils einführbar sind.

Gemäß einer besonderen Ausführungsform der Erfindung ist vorgesehen, dass das jeweilige Gehäuseteil in Querschnitt U-förmig gestaltet ist. Das jeweilige Gehäuseteil weist zweckmäßig zwei parallele kurze Schenkel und einen diese verbindenden langen Steg auf, wobei die Verbindung der beiden Gehäuseteile im Bereich der Schenkel erfolgt.

Grundsätzlich wird es als vorteilhaft angesehen, wenn die beiden Gehäuseteile ineinander steckbar und rastierend miteinander verbindbar sind.

Bei einer U-förmigen Gestaltung des jeweiligen Gehäuseteils ist insbesondere das eine Gehäuseteil im Bereich der Schenkel mit Rastvorsprüngen versehen und es weist das andere Gehäuseteil im Bereich der Schenkel Rastnasen auf. Dies ermöglicht es, die beiden Gehäuseteile in unterschiedlichen Stellungen zueinander zu rastieren, so dass der Berührschutz für Schienen unterschiedlicher Stärke Verwendung finden kann.

Von besonderem Vorteil ist es, wenn die Schlitze im Bereich einer Seite des Gehäuses angeordnet sind und im Bereich dieser Seite des Gehäuses die Schiene das Gehäuse kontaktiert. Die Schiene ist somit definiert im Bereich der Schlitze angeordnet, so dass unabhängig von der Höhe der Schiene immer die definierte Anlage der Schiene im Gehäuse gewährleistet ist. Dies kann beispielsweise dadurch erreicht werden, dass eines der beiden Gehäuseteile Federvorsprünge auf, die in den innerhalb des Gehäuses gebildeten Aufnahmeraum für die Schiene ragen, wobei die Federvorsprünge in einer Flucht nebeneinander in Abstand angeordnet sind und die Fluchtlinie parallel zur Längserstreckung der Schiene verläuft. Ist eine Schiene mittels der beiden Gehäuseteile abzudecken, die im Wesentlichen vollständig den Aufnahmeraum des Gehäuses einnimmt, drückt die Schiene beim Montieren der Gehäuseteile die Federvorsprünge zurück. Ist eine Schiene geringerer Breite einzusetzen, wobei die Breite auf die Position der Federvorsprünge abgestimmt ist, wird das Gehäuse bezüglich der Schiene so positioniert, dass die Schiene im Bereich der einen Seite des Gehäuses angeordnet ist, wobei in dieser Position die Federvorsprünge vorstehen und die Schiene auf der den Schlitzen abgewandten Seite hintergreifen, somit die Schiene im Bereich deren die Stärke der Schiene definierenden, langen Schmalseite hintergreift. Durch Anordnung von Federvorsprüngen in unterschiedlichen Fluchtlinien lassen sich so Schienen unterschiedlicher Breite definiert bezüglich der Schlitze positionieren. Die Positionierung erfolgt immer unsymmetrisch, somit zu dem Bereich des Gehäuses hin, in dem sich die Schlitze befinden.

Aufgrund der Gestaltung des Gehäuses mit den beiden Gehäuseteilen, insbesondere mit deren Teilungsebene parallel zur Hauptebene der als Flachschiene ausgebildeten Schiene, ist sichergestellt, dass bei mit der Schiene verbundener Klemme das Gehäuse nicht entfernt werden kann, weil die Zähne der Klemmbacken die Schlitze durchgreifen. Eine Demontage des Berührschutzes kann somit nur bei demontiertem elektrischen Gerät stattfinden.

Verwendung findet der Berührschutz insbesondere für Schienen/Flachschienen mit einer Breite von 30 bis 60 mm, im besonderen Fall sogar mit einer Breite von 20 bis 120 mm, ferner insbesondere für Flachschienen mit einer Stärke von 5, 6 oder 10 mm.

Bei Anordnung der Schienen horizontal, liegt das Gehäuse im oberen Bereich der Schiene an. Dies erleichtert die Montage erheblich, wobei immer die definierte Position der Schlitze zur oberen Begrenzung der Schiene gewährleistet ist.

Weitere Merkmale der Erfindung sind in den Unteransprüchen, der Beschreibung der Figuren sowie den Figuren selbst offenbart, wobei bemerkt wird, dass alle Merkmale und Einzelmerkmale erfindungswesentlich sind.

Die Erfindung wird anhand eines in der Zeichnung dargestellten bevorzugten Ausführungsbeispiels näher erläutert. Es zeigt:

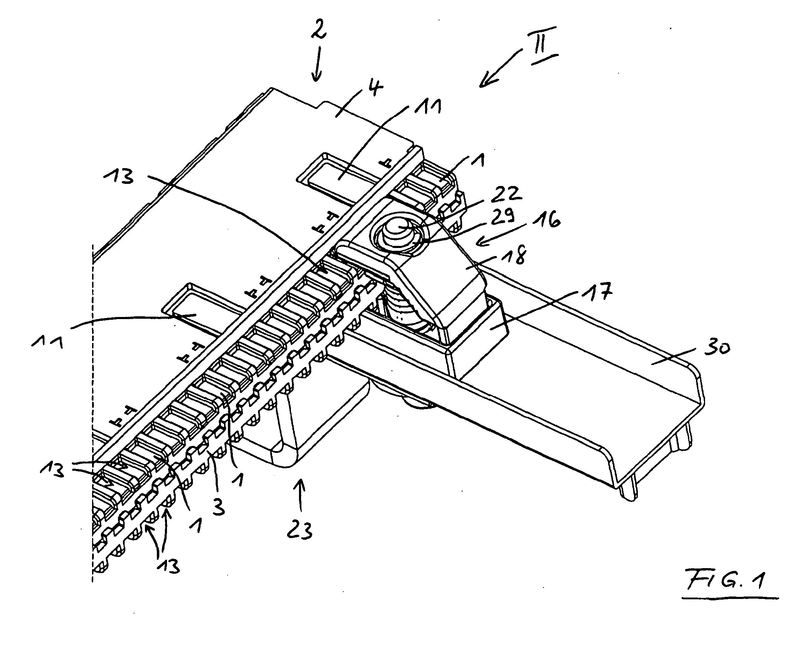

- Figur 1: In einer räumlichen Ansicht die Kontaktierung einer mit dem erfindungsgemäßen Berührschutz versehenen Schiene mittels einer Klemme eines elektrischen Gerätes,

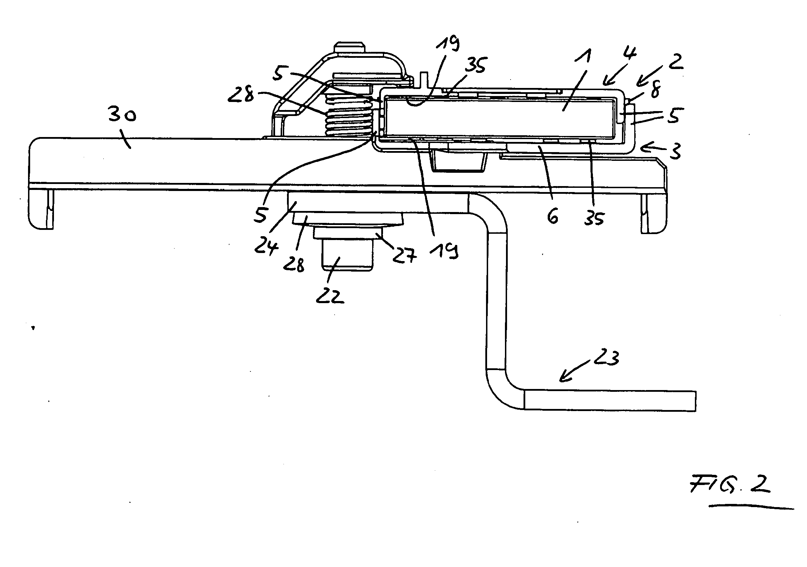

- Figur 2: eine Ansicht der Anordnung gemäß Fig. 1, in Längsrichtung der Schiene gesehen (gemäß Pfeil II in Figur 1), mit veranschaulichter Schiene großer Breite und großer Stärke,
- Figur 3: einen Schnitt durch die Anordnung gemäß Figur 2, geschnitten im Bereich der Klemme und der Schiene,
- Figur 4: einen Schnitt durch die Anordnung gemäß Figur 3, geringfügig in Abstand zur Schnittebene gemäß Figur 3 geschnitten, bei paralleler Anordnung der Schnittebenen,
- Figur 5: einen Schnitt durch die Anordnung gemäß Figur 4, veranschaulicht für eine Schiene geringerer Stärke,
- Figur 6: einen Schnitt durch die Anordnung gemäß Figur 3, veranschaulicht für eine Schiene geringerer Stärke und geringerer Breite,

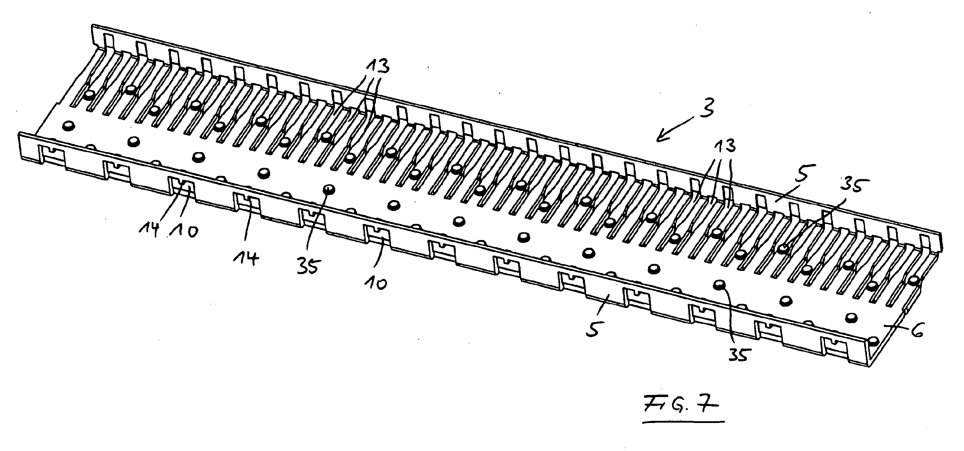

- Figur 7: eine räumliche Ansicht der Innenseite des einen Gehäuseteils zum Abdecken der Schiene,

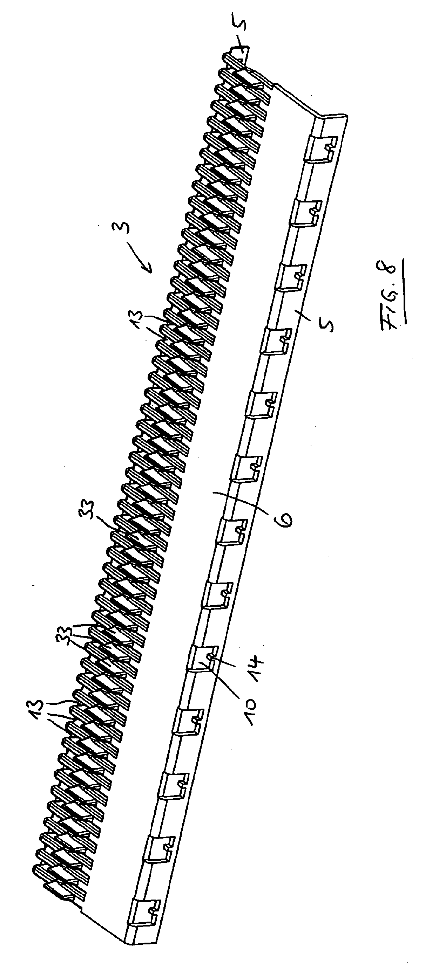

- Figur 8: eine räumliche Ansicht der Außenseite des in Figur 7 gezeigten Gehäuseteils,

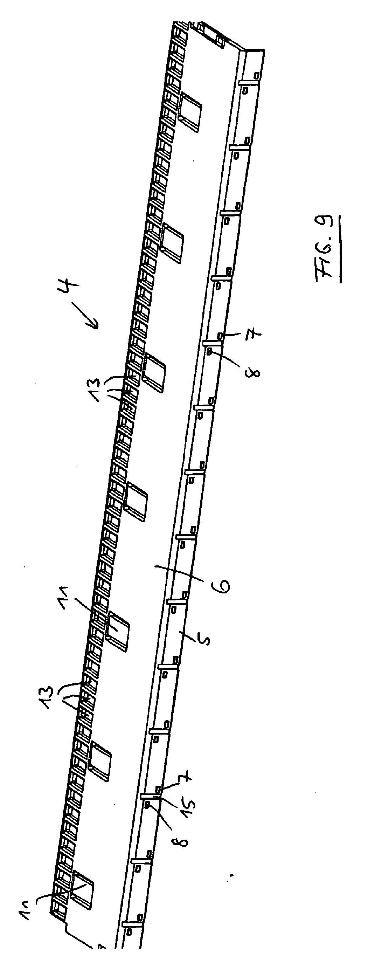

- Figur 9: eine räumliche Ansicht der Außenseite des anderen Gehäuseteils zum Abdecken der Schiene und

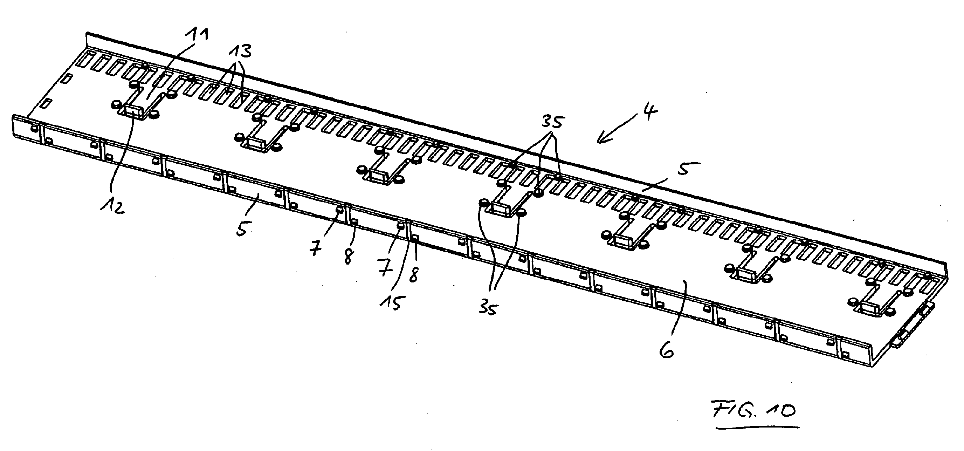

- Figur 10: eine räumliche Ansicht der Innenseite des in Figur 9 gezeigten Gehäuseteils.

Veranschaulicht ist eine Schiene 1, insbesondere eine Schiene eines elektrischen Sammelschienensystems. Die Schiene besitzt einen reckteckigen Querschnitt und ist in aller Regel so in einer elektrischen Verteileranlage eingebaut, dass sie, bezogen auf deren Längserstreckung, horizontal orientiert ist und sich in ihrer Breite vertikal erstreckt.

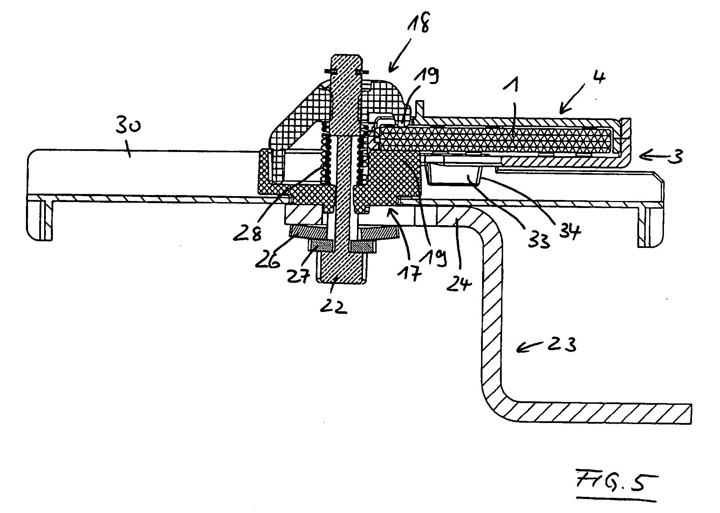

Die Schiene 1 weist einen Berührschutz auf. Hierzu ist ein zweiteilige Gehäuse 2 vorgesehen, das die Schiene 1 vollständig umgibt. Beide Gehäuseteile 3 und 4 sind im Querschnitt U-förmig gestaltet. Das jeweilige Gehäuseteil 3 bzw. 4 weist zwei parallele kurze Schenkel 5 und einen diese verbindenden langen Steg 6 auf, wobei die Verbindung der beiden Gehäuseteile 3 und 4 im Bereich der Schenkel 5 erfolgt. Die Abmessungen des Gehäuseteils 3 sind so gewählt dass es eine Außenschale darstellt, während die Abmessungen des Gehäuseteils 4 so gewählt sind, dass es eine Innenschale darstellt. Die Innenschale ist mit geringem Spiel in die Außenschale einsteckbar bzw. die Außenschale auf die Innenschale aufsteckbar und hierbei die beiden Gehäuseteile 3 und 4 miteinander rastierbar. Zum Rastieren weist ein kurzer Schenkel 5 des Gehäuseteils 4 nach außen gerichtete Rastnasen 7 und 8 auf, wobei die jeweilige Rastnase 7 im Bereich des freien Endes des kurzen Schenkels 7 und die andere Rastnase 8 zwischen der Rastnase 7 und dem dem langen Steg 6 zugewandten Ende des kurzen Schenkels 5 angeordnet ist. In Wirkverbindung mit den Rastnasen 7 bzw. 8 ist eine Anlagekante 9 einer Aussparung 10 im Bereich des benachbarten kurzen Schenkels 5 des anderen Gehäuseteils 3 bringbar. Bei Eingriff der Rastnasen 7 des Gehäuseteils 4 mit den Anlagekanten 9 des Gehäuseteils 3 ergibt sich ein relativ großer Abstand zwischen den langen Schenkeln 6 der beiden Gehäuseteile 3 und 4, so dass in dem zwischen den langen Stegen 6 befindlichen Bereich der Gehäuseteile 3 und 4 eine Schiene 1 relativ großer Stärke Platz findet. Ist das Gehäuseteil 4 hingegen weiter in das Gehäuseteil 3 eingesteckt, rastieren die Rastnasen 8 und die Anlagekante 9, womit weniger Platz zwischen den langen Stegen 6 der beiden Gehäuseteile 3 und 4 verbleibt, so dass, wie der Darstellung der Figur 5 zu entnehmen ist, nur eine Schiene 1 mit geringerer Stärke zwischen den Gehäuseteilen 3 und 4 aufgenommen wird.

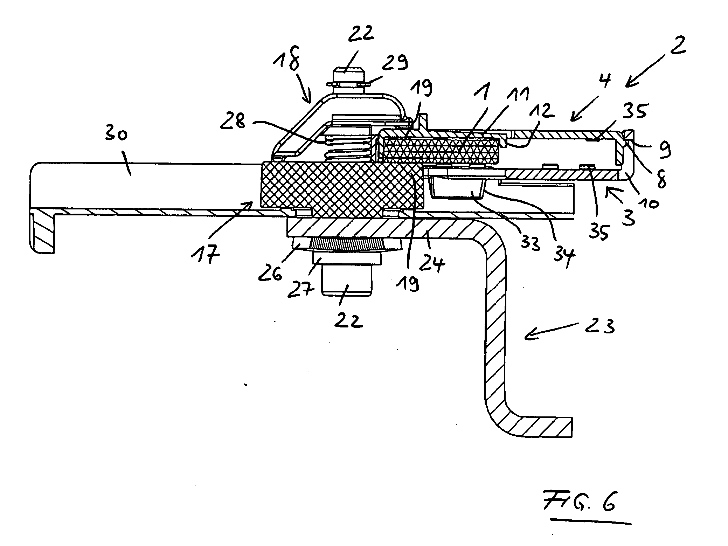

Das Gehäuseteil 4 ist im Bereich seines langen Steges 6 mit einer Vielzahl von Federvorsprüngen 11 versehen, die im Bereich der halben Länge des langen Stegs 6 hakenförmige Endabschnitte 12 aufweisen, die bei entspanntem Federvorsprung 11 in den zwischen den kurzen Schenkel 5 des Gehäuseteils 4 ragenden Raum reichen. Ist innerhalb des Gehäuses 2 eine Schiene 1 geringerer Breite platziert, die an einem der kurzen Schenkel 5 des Gehäuseteils 4 anliegt, hintergreifen die Endabschnitte 12 der Federvorsprünge 11 die Schiene 1, wie zur Figur 6 verdeutlicht, auf der Seite, die der Seite abgewandt ist, welche am kurzen Schenkel 5 des Gehäuseteils 4 anliegt. Nimmt das Gehäuse 2 hingegen eine Schiene 1 relativ großer Breite auf, und zwar unabhängig von der Stärke der Schiene 1, drückt die Schiene 1 beim Ineinanderstecken der Gehäuseteile 3 und 4 die Federvorsprünge 11 zurück, so dass die Endabschnitte 12 der Federvorsprünge 11 die Schiene 1 nicht hintergreifen, sondern an deren zugewandten, sich in Breitenrichtung der Schiene 1 verlaufenden Schienenfläche anliegen.

Das jeweilige Gehäuseteil 3 bzw. 4 weist in dessen Längserstreckung im Wesentlichen über dessen gesamte Länge nebeneinander angeordnete, identisch gestaltete Schlitze 13 auf. Die Schlitze 13 verlaufen somit, bezogen auf das jeweilige Gehäuseteil 3 bzw. 4, in Längserstreckung dessen langen Steges 6 bzw. bezogen auf die Schiene 1 in Richtung der Breitenerstreckung der Schiene. Durch diese Schlitze 13 der beiden Gehäuseteile 3 und 4 erfolgt die Kontaktierung eines elektrischen Gerätes der elektrischen Verteileranlage, bei dem es sich beispielsweise um eine NH-Sicherungslastschaltleiste handelt. Die Kontaktierung kann in einem beliebigen Bereich des Gehäuses 2, bezogen auf dessen Länge erfolgen. Die Schlitzabstände der Schlitze 13 des einen Gehäuseteils 3 entsprechen den Schlitzabständen der Schlitze 13 des anderen Gehäuseteils 4, wobei die Schlitzanordnung des einen Gehäuseteils geringfügig zu des des anderen Gehäuseteils versetzt ist. Die beiden Gehäuseteile lassen sich zwangsläufig nur so positionieren, dass jeweilige, durch die beiden Gehäuseteile 3 und 4 gebildete Schlitzpaare eindeutig zueinander positioniert sind. Hierzu ist das Gehäuseteil 3 im Bereich der jeweiligen Aussparung 10 mit einem nach innen gerichteten Vorsprung 14 versehen, der bei ineinander gesteckten Gehäuseteilen 3 und 4 in eine Führungsnut 15 des Gehäuseteils 4 eingreift.

Mehrere Gehäuseteile 3 bzw. mehrere Gehäuseteile 4 können in Längserstreckung des jeweiligen Gehäuseteils ineinander gesteckt werden, so dass sich ein beliebig langes Gehäuse 2 erzeugen lässt, das eine entsprechend lange Schiene 1 umschließt.

Dem Verbinden des elektrischen Geräts mit der Schiene 1 dient eine Klemme 16. Diese weist eine Klemmbacke 17 und eine Klemmbacke 18 auf, die mit Zähnen 19 versehen sind, wobei die Teilung der Zähne 19 der jeweiligen Klemmbacke 17 bzw. 18 der Teilung der Schlitze 13 der Gehäuseteile 3 bzw. 4 entspricht. Die eine Klemmbacke 17 ist mit einer Bohrung 20, die andere Klemmbacke 18 mit einem Gewinde 21 versehen. Eine Innensechskantschraube 22 verbindet die beiden Klemmbacken 17 und 18. Mittels dieser Schraube 22 wird die Klemme 16 an der Schiene 1 geklemmt und überdies die mechanische und elektrische Verbindung zum elektrischen Gerät hergestellt. Diese mechanische und elektrische Verbindung erfolgt über einen Winkel 23 des Geräts bzw. der Leiste, der als Kupferschiene ausgebildet ist, die in ihrem Endabschnitt 24 mit einem Langloch 25 versehen ist. Die Schraube 22 durchsetzt zwei Spannscheiben 26 und 27, nachfolgend das Langloch 25, die Bohrung 20 in der Klemmbacke 17, eine Schraubendruckfeder 28, die sich an den beiden Klemmbacken 17 und 18 abstützt, und ist mit ihrem Gewindeabschnitt in das Gewinde 21 in die Klemmbacke 18 eingeschraubt. Im Bereich des freien Endes ist die Schraube 22 mittels einer in eine Umfangsnut der Schraube eingreifenden Sicherungsrings 29 verliersicher gehalten. Bei angezogener Schraube 22 liegt der Endabschnitt 24 des Winkels 23 unmittelbar an der Klemmbacke 17 an. Die Klemmbacke 17 ist mit einem Rücksprung versehen. Dieser dient der Aufnahme einer zusätzlichen Geräteabdeckung zwischen der Klemmbacke 17 und dem Endabschnitt 24 des Winkels 23. Die beiden Klemmbacken 17 und 18 sind mit Vorsprüngen 31, 32 versehen, die gewährleisten, dass beim Verspannen der beiden Backen, die sich nicht zueinander verdrehen können.

Vor dem Befestigen des elektrischen Geräts, das beispielsweise als Schaltleiste ausgebildet ist, wird der vormontierte Zustand herbeigeführt, indem die Schraube 22 die beiden Spannscheiben 26, 27, das Langloch 25 im Winkel 23, die Geräteabdeckung 30, die Klemmbacke 17 und die Schraubendruckfeder 28 durchsetzt sowie die Schraube 22 in das Gewinde 21 der Klemmbacke 18 eingeschraubt ist. Auf das freie Ende der Schraube 23 wird dann der Sicherungsring 27 aufgesteckt. In geöffneter Stellung der Klemme 15 wird diese dann in Breitenerstreckung der Schiene 1, somit bezogen auf den allgemeinen Einbauzustand der Schiene 1, von oben auf diese aufgesteckt. Das Gehäuse 2, konkret das Gehäuseteil 3, ist dabei bezüglich der Geräteabdeckung 30 geführt. So weist das Gehäuseteil 3 zwischen dessen Schlitzen 13 Vorsprünge 33 auf, die trapezförmig ausgebildet ist. Der Längserstreckung der Vorsprünge 33 entsprechend ist die Geräteabdeckung 30 mit Vertiefungen 34 versehen, so dass die im Bereich der Geräteabdeckung 30 befindlichen Vorsprünge 33 in die Vertiefungen 34 der Geräteabdeckung 30 beim Aufstecken der vormontierten Anordnung eingreifen. Beim Aufstecken der Anordnung auf die Schiene 1 werden die geringfügig zueinander versetzt angeordneten Zähne 19 der beiden Klemmbacken 17 und 18 in die im Bereich der Klemmbacken 17 und 18 angeordneten Schlitze 13 der Gehäuseteile 3 und 4 eingeführt. Nur in dem Bereich, in dem die Zähne 19 benachbart der Schiene 1 angeordnet sind, erstrecken sich die Schlitze 13 im Gehäuse 2. Beim Anziehen der Schraube 22 werden die beiden Klemmbacken 17 und 18 aufeinander zu bewegt, wobei die Schiene 1 zwischen den beiden Klemmbacken 17 und 18 geklemmt wird. Da nur eine Öffnung im Gehäuse 2 mittels der Schlitze 13 gegeben ist, und diese entsprechend schmal und nur soweit wie nötig lang gestaltet sind, ist Berührschutz nach IP 20 gewährleistet. Die Geräteabdeckung 30 gewährleistet zudem für den Bereich des nicht im Einzelnen veranschaulichten Gerätes den Berührschutz nach IP 20.

Das Gehäuse 2 wird bezüglich der Schiene 1 immer so positioniert, dass die Schiene 1 benachbart der Schraube 22 angeordnet ist. Damit ist sichergestellt, dass die Klemmung der Schiene 1 sicher im Bereich der Schlitze 13 erfolgen kann.

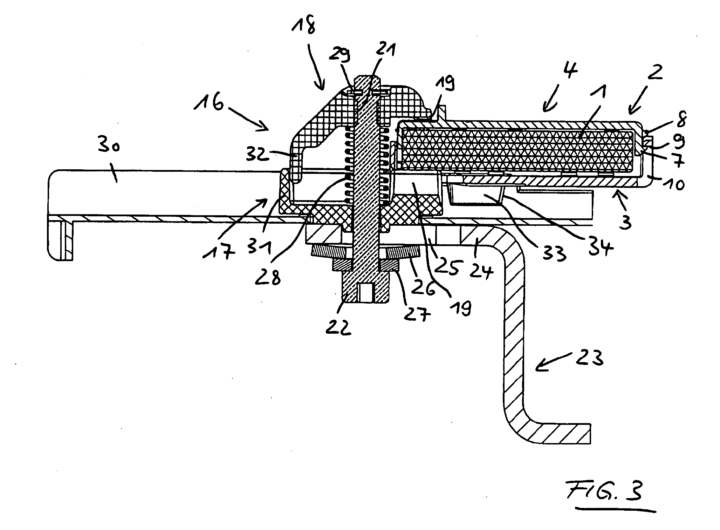

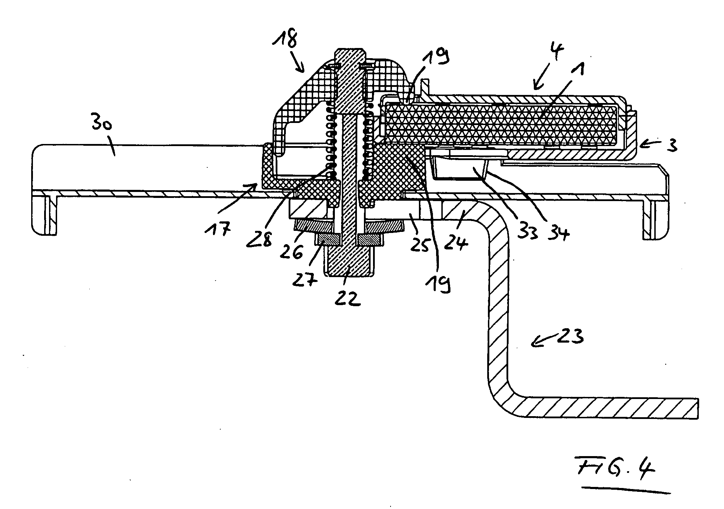

Die Figuren 3 und 4 zeigen die Klemmsituation bei einer Schiene 1 mit großer Stärke und großer Breite. Figur 5 und 6 veranschaulicht dieselbe Situation für eine Schiene 1 mit geringerer Stärke. In diesem Fall ist die Schraube 22 zum Herbeiführen der Klemmung weiter in das Gewinde 21 der Klemmbacke 18 eingeschraubt, als bei der Variante nach Figur 3 bzw. 4. Die Schiene 1 kontaktiert die Gehäuseteile 3 bzw. 4 im Bereich von vorstehenden Anlagenoppen 35, die das jeweilige Gehäuseteil auf seiner dem anderen Gehäuseteil zugewandten Seite aufweist.

## Patentansprüche

1. Anordnung einer Schiene (1), eines Berührschutzes (2) für diese und einer elektrischen Verbindung mit der Schiene (1), mit dem Berührschutz (2) für die rechteckigen Querschnitt aufweisende Schiene (1), insbesondere eine Sammelschiene, in einer elektrischen Verteileranlage und dergleichen, mit Schlitzen (13) im Berührschutz (2), durch die ohne Abnahme des Berührschutzes (2) die elektrische Verbindung mit der Schiene (1) herstellbar ist, wobei die elektrische Verbindung mittels einer Klemme (16) mit Klemmbacken (17, 18) erzielt wird, ein Klemmbacken (17) Zähne (19) aufweist, die Schlitze (13) durchsetzen und die Schiene (1) auf einer Seite kontaktieren, sowie eine andere Klemmbacke (18) die Schiene (1) auf der der einen Seite abgewandten Seite kontaktiert, **dadurch gekennzeichnet, dass** die andere Klemmbacke (18) Zähne (19) zum Kontaktieren der Schiene (1) aufweist, der Berührschutz (2) als Gehäuse ausgebildet ist, das die Schiene (1) vollständig umgibt, das Gehäuse (2) ein erstes Gehäuseteil (3) mit Schlitzen (13) für die Zähne der einen Klemmbacke (17) und ein zweites Gehäuseteil (4) mit Schlitzen (13) für die Zähne (19) des anderen Klemmbackens (18) aufweist, wobei die beiden Gehäuseteile (3, 4) miteinander verbindbar sind.

2. Anordnung nach Anspruch 1, **dadurch gekennzeichnet, dass** die beiden Gehäuseteile (3, 4) ineinander steckbar und rastierend miteinander verbindbar sind.

3. Anordnung nach Anspruch 1 oder 2, **dadurch gekennzeichnet, dass** das jeweilige Gehäuseteil (3 bzw. 4) in dessen Längserstreckung im Wesentlichen über dessen gesamte Länge nebeneinander angeordnete, identisch gestaltete Schlitze (13) aufweist.

4. Anordnung nach einem der Ansprüche 1 bis 3, **dadurch gekennzeichnet, dass** der Abstand benachbarter Schlitze (13) der Schlitzanordnung des jeweiligen Gehäuseteils (3, 4) gleich ist.

5. Anordnung nach Anspruch 3 oder 4, **dadurch gekennzeichnet, dass** die Schlitzabstände der Schlitze (13) des einen Gehäuseteils (3) den Schlitzabständen der Schlitze (13) des anderen Gehäuseteils (4) entsprechen.

6. Anordnung nach einem der Ansprüche 1 bis 5, **dadurch gekennzeichnet, dass** das jeweilige Gehäuseteil (3 bzw. 4) im Querschnitt U-förmig gestaltet ist.

7. Anordnung nach einem der Ansprüche 1 bis 6, **dadurch gekennzeichnet, dass** das jeweilige Gehäuseteil (3 bzw. 4) zwei parallele kurze Schenkel (5) und einen diesen verbindenden langen Steg (6) aufweist und die Verbindung der beiden Gehäuseteile (3, 4) im Bereich der Schenkel (5) erfolgt.

8. Anordnung nach Anspruch 7, **dadurch gekennzeichnet, dass** das eine Gehäuseteil (3) im Bereich eines Schenkels (5) Rastnasen (7) und das andere Gehäuseteil (4) im Bereich des benachbarten Schenkels (5) Rastvorsprünge (9) aufweist, die Rastnasen/Rastvorsprünge, insbesondere auf der den Schlitzen (13) abgewandten Seite des Gehäuses (2) angeordnet sind.

9. Anordnung nach einem der Ansprüche 1 bis 8, **dadurch gekennzeichnet, dass** die beiden Gehäuseteile (3, 4) in unterschiedlichen Stecktiefen rastierbar sind.

10. Anordnung nach einem der Ansprüche 1 bis 9, **dadurch gekennzeichnet, dass** eines der beiden Gehäuseteile (4) Federvorsprünge (11) aufweist, die in den innerhalb des Gehäuse (2) gebildeten Aufnahmeraum für die Schiene (1) ragen, wobei die Federvorsprünge (11) in einer Flucht nebeneinander in Abstand angeordnet sind und die Fluchtlinie parallel zur Längserstreckung der Schiene (1) verläuft.

11. Anordnung nach einem der Ansprüche 1 bis 10, **dadurch gekennzeichnet, dass** die Schlitze (13) im Bereich einer Seite des Gehäuses (1) angeordnet sind und im Bereich dieser Seite des Gehäuses (2) die Schiene (1) des Gehäuse (2) kontaktiert.

## Claims

1. Arrangement of a rail (1), of a means for protection against electric shock (2) therefor and of an electrical connection to the rail (1), to the means for protection against electric shock (2) for the rail (1) having a rectangular cross section, in particular a busbar, in an electrical distribution system or the like, with slots (13) in the means for protection against electric shock (2), through which slots the electrical connection to the rail (1) can be produced without removal of the means for protection against electric shock (2), the electrical connection being produced by means of a clamp (16) with clamping jaws (17, 18), one clamping jaw (17) having teeth (19) which pass through the slots (13) and make contact with the rail (1) on one side, and another clamping jaw (18) making contact with the rail (1) on the side opposite this side, **characterized in that** the other clamping jaw (18) has teeth (19) for making contact with the rail (1), the means for protection against electric shock (2) is in the form of a housing that completely surrounds the rail (1), the housing (2) has a first housing part (3) with slots (13) for the teeth of the one clamping jaw (17) and a second housing part (4) with slots (13) for the teeth (19) of the other clamping jaw (18), the two housing parts (3, 4) being capable of being connected to one another.

2. Arrangement according to Claim 1, **characterized in that** the two housing parts (3, 4) are capable of being plugged one inside the other and of being connected in latching fashion to one another.

3. Arrangement according to Claim 1 or 2, **characterized in that** the respective housing part (3 or 4) has identically configured slots (13), which are arranged next to one another substantially over the entire length of said housing part in the longitudinal extent thereof.

4. Arrangement according to one of Claims 1 to 3, **characterized in that** the gap between adjacent slots (13) of the slot arrangement of the respective housing part (3, 4) is identical.

5. Arrangement according to Claim 3 or 4, **characterized in that** the slot gaps between the slots (13) of one housing part (3) correspond to the slot gaps of the slots (13) of the other housing part (4).

6. Arrangement according to one of Claims 1 to 5, **characterized in that** the respective housing part (3 or 4) is in the form of a U in cross section.

7. Arrangement according to one of Claims 1 to 6, **characterized in that** the respective housing part (3 or 4) has two parallel short limbs (5) and one long web (6) connecting said short limbs, and the two housing parts (3, 4) are connected in the region of the limbs (5).

8. Arrangement according to Claim 7, **characterized in that** one housing part (3) has latching tabs (7) in the region of one limb (5), and the other housing part (4) has latching projections (9) in the region of the adjacent limb (5), the latching tabs/latching
projections being arranged in particular on that side of the housing (2) which is remote from the slots (13).

9. Arrangement according to one of Claims 1 to 8, **characterized in that** the two housing parts (3, 4) are capable of being latched to different plug-in depths.

10. Arrangement according to one of Claims 1 to 9, **characterized in that** one of the two housing parts (4) has spring projections (11), which protrude into the accommodating area formed within the housing (2) for the rail (1), the spring projections (11) being arranged so as to be aligned with one another with a gap with respect to one another, and the line of alignment running parallel to the longitudinal extent of the rail (1).

11. Arrangement according to one of Claims 1 to 10, **characterized in that** the slots (13) are arranged in the region of one side of the housing (1) and make contact with the rail (1) of the housing (2) in the region of this side of the housing (2).

## Revendications

1. Agencement d'un rail (1), d'une protection contre le contact (2) pour celui-ci, et d'une connexion électrique avec le rail (1), avec la protection contre le contact (2) pour le rail (1) présentant une section transversale rectangulaire, notamment une barre omnibus, dans une installation de distribution électrique et similaire, avec des fentes (13) dans la protection contre le contact (2), par lesquelles, sans retirer la protection contre le contact (2), la connexion électrique avec le rail (1) peut être établie, la connexion électrique étant réalisée au moyen d'une borne (16) avec des mâchoires de serrage (17, 18), une mâchoire de serrage (17) présentant des dents (19), qui traversent les fentes (13) et qui viennent en contact avec le rail (1) d'un côté, et une autre mâchoire de serrage (18) venant en contact avec le rail (1) du côté opposé au premier côté, **caractérisé en ce que** l'autre mâchoire de serrage (18) présente des dents (19) pour venir en contact avec le rail (1), la protection contre le contact (2) est réalisée sous forme de boîtier qui entoure complètement le rail (1), le boîtier (2) présente une première partie de boîtier (3) avec des fentes (13) pour les dents d'une mâchoire de serrage (17) et une deuxième partie de boîtier (4) avec des fentes (13) pour les dents (19) de l'autre mâchoire de serrage (18), les deux parties de boîtier (3, 4) pouvant être connectées l'une à l'autre.

2. Agencement selon la revendication 1, **caractérisé en ce que** les deux parties de boîtier (3, 4) peuvent être enfichées l'une dans l'autre et peuvent être connectées l'une à l'autre par encliquetage.

3. Agencement selon la revendication 1 ou 2, **caractérisé en ce que** la partie de boîtier respective (3, respectivement 4), présente, dans son étendue longitudinale, essentiellement sur toute sa longueur, des fentes (13) disposées les unes à côté des autres, de configuration identique.

4. Agencement selon l'une quelconque des revendications 1 à 3, **caractérisé en ce que** la distance entre les fentes adjacentes (13) de l'agencement de fentes de chaque partie de boîtier (3, 4) est identique.

5. Agencement selon la revendication 3 ou 4, **caractérisé en ce que** les distances entre les fentes (13) d'une partie de boîtier (3) correspondent aux distances entre les fentes (13) de l'autre partie de boîtier (4).

6. Agencement selon l'une quelconque des revendications 1 à 5, **caractérisé en ce que** la partie de boîtier respective (3, respectivement 4) est configurée en forme de U en section transversale.

7. Agencement selon l'une quelconque des revendications 1 à 6, **caractérisé en ce que** la partie de boîtier respective (3, respectivement 4) présente deux branches courtes parallèles (5) et une longue âme (6) qui les relie, et la connexion des deux parties de boîtier (3, 4) s'effectue dans la région des branches (5).

8. Agencement selon la revendication 7, **caractérisé en ce que** l'une des parties de boîtier (3) présente dans la région d'une branche (5) des nez d'encliquetage (7) et l'autre partie de boîtier (4) présente dans la région de la branche adjacente (5) des saillies d'encliquetage (9), et les nez/saillies d'encliquetage sont disposés notamment sur le côté du boîtier (2) opposé aux fentes (13).

9. Agencement selon l'une quelconque des revendications 1 à 8, **caractérisé en ce que** les deux parties de boîtier (3, 4) peuvent s'encliqueter à des profondeurs d'encliquetage différentes.

10. Agencement selon l'une quelconque des revendications 1 à 9, **caractérisé en ce que** l'une des deux parties de boîtier (4) présente des saillies à ressort (11) qui pénètrent dans l'espace de réception pour le rail (1) formé à l'intérieur du boîtier (2), les saillies à ressort (11) étant disposées à distance et en affleurement les unes à côté des autres, et la ligne d'affleurement s'étendant parallèlement à l'étendue longitudinale du rail (1).

11. Agencement selon l'une quelconque des revendications 1 à 10, **caractérisé en ce que** les fentes (13) sont disposées dans la région d'un côté du boîtier (2) et viennent en contact avec le rail (1) du boîtier (2) dans la région de ce côté du boîtier (2).
